# EUROPÄISCHE PATENTSCHRIFT

(11) **EP 2 601 107 B1**
(45) Veröffentlichungstag und Bekanntmachung des Hinweises auf die Patenterteilung: **20.08.2014**
(21) Anmeldenummer: 11728867.0
(22) Anmeldetag: 04.07.2011
(51) Int. Cl.: B65C 9/40, B67B 3/26, B67B 3/00, B29C 49/78

(54) **VERFAHREN UND VORRICHTUNG ZUM BETREIBEN EINER ANLAGE ZUM BEHANDELN VON BEHÄLTNISSEN MIT ÜBERGEORDNETER PARAMETERANWAHL**
METHOD AND APPARATUS FOR OPERATING AN INSTALLATION FOR HANDLING CONTAINERS, WITH HIGHER-ORDER PARAMETER SELECTION
PROCÉDÉ ET DISPOSITIF D'EXPLOITATION D'UNE INSTALLATION DE MANIPULATION DE RÉCIPIENTS AVEC SÉLECTION DES PARAMÈTRES DE NIVEAU SUPÉRIEUR

(30) Priorität: 03.08.2010 DE 102010033171
(43) Veröffentlichungstag der Anmeldung: 12.06.2013
(73) Patentinhaber: Krones AG, 93073 Neutraubling (DE)
(72) Erfinder: HAHN, Wolfgang, 93073 Neutraubling (DE); ZÖLFL, Markus, 93073 Neutraubling (DE); PRONOLD, Timo, 93073 Neutraubling (DE)
(74) Vertreter: Hannke, Christian
(86) Internationale Anmeldenummer: PCT/EP2011/061177
(87) Internationale Veröffentlichungsnummer: WO 2012/016771

(56) Entgegenhaltungen:
- EP-A2- 1 306 195
- EP-A2- 2 098 355
- DE-A1-102005 041 531
- DE-A1-102006 051 533
- DE-A1-102008 008 528

## Beschreibung

Die vorliegende Erfindung bezieht sich auf ein Verfahren gemäß dem Oberbegriff des Anspruchs 1 zum Betreiben einer Anlage zum Behandeln von Behältnissen sowie eine Anlage gemäß dem Oberbegriff des Anspruchs 6 zum Behandeln von Behältnissen. Aus dem Stand der Technik sind diverse Anlagen zum Behandeln von Behältnissen bekannt. So sind Füller bekannt, welche Behältnisse, wie beispielsweise Kunststoff- oder Glasflaschen, mit Flüssigkeiten befüllen. Weiterhin sind auch so genannte Blasformmaschinen oder Streckblasmaschinen bekannt, welche Kunststoffvorformlinge zu Kunststoffbehältnissen umformen.

So beschreibt beispielsweise die EP 1 471 008 A1 ein Verfahren und ein System zur Überwachung eines Verpackungs- oder Abfüllvorgangs. Dabei werden erste Dateninformationen erfasst, welche die Packung oder einen zur Bildung der Packung verwendeten Packstoff identifizieren sowie zweite Dateninformationen, welche der Beschreibung von Maschinenteilen dienen.

Aus der Patentanmeldung Nr. 10 2009 040 977 A1 der Anmelderin ist weiterhin eine Behältnisbehandlungsanlage bekannt, welche eine Erfassungseinrichtung zur Erfassung von Eigenschaften eines zu behandelnden Behältnisses aufweist, sowie eine Vergleichseinrichtung zum Vergleich des Erfassungsergebnisses der Erfassungseinrichtung mit einem Behältnissollwert.

Insbesondere bei der Programmumstellung von Maschinen der Getränkeindustrie auf eine andere Sorte, zum Beispiel eine neue Flaschensorte, erfolgt dies üblicherweise an der Maschine durch den Bediener oder Einrichter. Dabei wird eine vorher angelegte Sorte (welche als Datensatz zur Verfügung steht) im Menü ausgewählt und geladen. Ein solcher Datensatz enthält beispielsweise mechanische Einstellwerte an der Maschine, die der Bediener für die Umstellung angezeigt bekommt.

Aus der DE 10 2008 008528 A1 ist eine Behandlungsanlage, insbesondere für Behältnisse, mit rückwirkender Korrekturmöglichkeit bekannt, wobei eine Steuerung Produktparameter berücksichtigt. Diese Offenlegungsschrift offenbart die Oberbegriffe des Ansprüche 1 und 6.
Bekannt ist auch, mit einer übergeordneten Sortenverwaltung zum Beispiel in einem LMS (Line-Management-System) zentral die Sorten der Einzelmaschinen zu verwalten und entsprechend einem anstehenden Fertigungsauftrag an die jeweils betroffenen Maschinen zu übertragen.

Dabei tritt jedoch das Problem auf, dass auch die verwendeten Materialien die Parametereinstellungen an der Maschine vor Ort beeinflussen. Wird zum Beispiel ein Kunststoffvorformling mit anderen Materialeigenschaften, zum Beispiel mit Zusätzen für die Bindung von Sauerstoff im Getränk, verwendet, hat dies erfahrungsgemäß einen Einfluss auf die Einstellung der Heizung und damit auf die Heizparameter an der Blasmaschine. Auch kann die Oberflächenbeschaffenheit der Flasche (Rauhigkeit oder Reibwert) beeinflusst werden und sich dadurch das Verhalten des Behältnisses bei der Verarbeitung in einer Etikettiermaschine oder in einem Packereinlauf ändern. Auch sehr unterschiedlich können sich erfahrungsgemäß die scheinbar gleichen Materialien von verschiedenen Herstellern verhalten. Ursachen können das vom Hersteller verwendete Herstellverfahren zum Beispiel für den Kunststoffvorformling, die eingestellten Prozesszeiten oder andere Parameter sein.

Dies führt dazu, dass eine manuelle Anpassung der verwendeten Maschineparameter an den Maschinen in einer Abfüllanlage erforderlich wird. Diese Anpassung verursacht Verluste in Form von Maschinenstillständen für die erforderlichen neuen Einstellungen, Qualitätsverluste und damit Verlust an Produkt- und Verpackungsmaterial usw.

Andererseits wird in den meisten Abfüllanlagen nicht nur eine Produktionssorte produziert. Vielmehr sind diese Anlagen so ausgelegt, dass zu einem Zeitpunkt nur eine Sorte in Produktion ist, aber auf einfache Weise auf eine andere Sorte umgerüstet werden kann. Die Anzahl verschiedener Produktionssorten und die zeitlichen Abstände zwischen Umrüstungen können dabei sehr stark variieren.

Die Produktionssorten selbst setzen sich aus vielen Kategorien zusammen, wie z. B. dem Gebindeformat, der Gebindefarbe, dem Behälterformat, der Behälterfarbe, der Art und dem Dekor des Verschlusses oder auch der Anzahl, dem Format und dem Dekor der Etiketten auf den Behältern. Dabei müssen nicht alle Maschinen einer Anlage bzw. deren Parameter von sämtlichen Kategorien abhängig sein. Speziell bei Etikettiermaschinen ergibt sich in der Praxis oft eine sehr große Anzahl an Ausstattungsvarianten. Hier sind insbesondere die Kategorien Behälterformat, Verschlussformat und Etikettenausstattung relevant. Die Etikettenausstattung kann ihrerseits in Unterkategorien unterteilt werden, wie beispielsweise das Nutzvolumen, das Produkt und landesspezifische Inhalte.

Soll also im Stand der Technik eine Umrüstung auf eine andere Sorte durchgeführt werden, muss das Produktionspersonal neben mechanischen Umrüstarbeiten die vorab eingerichtete Produktionssorte der Maschine einstellen. Dies kann dabei beispielsweise durch eine übergeordnete Leitsteuerung (Scada, MES) oder direkt an der Maschinenbedienung erfolgen. Für diese Eingabe hat sich die Auswahl aus einer Liste auf einem touchfähigen Display als üblicher Weg etabliert.

Wenn jedoch die Anzahl an Produktionssorten sehr groß ist (z. B. liegt die Anzahl unterschiedlicher Ausstattungen in einer Etikettiermaschine in der Praxis oft bei mehreren Hundert) dann wird die Sorte erfahrungsgemäß auch in relativ kleinen Zeitabschnitten gewechselt. In diesem Fall ist die Auswahl aus einer Liste unübersichtlich, zeitraubend und fehleranfällig für das Bedienungspersonal. Da sich die Sorten teilweise nur in einem Kriterium unterscheiden, sind die Texte der Sortenbezeichner oft lang und sehr ähnlich. Durch die begrenzte Fläche des Displays ist zu einem Zeitpunkt immer nur ein kleiner Ausschnitt aus der Liste sichtbar, die übrigen Teile müssen durch Blättern in der Liste umständlich dargestellt werden.

Auf diese Weise kommt es desöfteren zu Fehleinstellungen, wobei der Benutzer versehentlich ein falsches Produkt auswählt oder anstelle des eigentlich vorgesehen Produktes zumindest kurzzeitig ein anderes Produkt hergestellt wird. Der vorliegenden Erfindung liegt daher die Aufgabe zugrunde, Sortenumstellungen bei der Herstellung von Behältnissen und insbesondere Getränkebehältnissen zu erleichtern. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Bei einem erfindungsgemäßen Verfahren zum Betreiben einer Anlage zum Behandeln von Behältnissen werden die Behältnisse von einer ersten Behandlungseinheit der Anlage mit vorgegebenen ersten Behandlungsparametern behandelt und die Behältnisse werden von einer zweiten Behandlungseinheit der Anlage mit vorgegebenen zweiten Behandlungsparametern behandelt. Dabei sind die ersten Behandlungsparameter und die zweiten Behandlungsparameter wenigstens teilweise veränderbar und hängen wenigstens teilweise von für das Behältnis charakteristischen Produktparametern ab.

Erfindungsgemäß werden für die Steuerung der ersten Behandlungseinheit hinterlegte Produktparameter des Behältnisses auch für die Steuerung der zweiten Behandlungseinheit verwendet, wobei Änderungen der Produktparameter automatisiert sowohl für die Steuerung der ersten Behandlungseinheit, als auch für die Steuerung der zweiten Behandlungseinheit berücksichtigt werden.

Es wird daher vorgeschlagen, an den Maschinen der Anlage, beispielsweise einer Abfüllanlage vorhandene relevante Daten über das tatsächliche eingesetzte Material zur Steuerung der Maschine oder zu einem zentralen System zu übertragen und beispielsweise auch für die Sortenverwaltung zu benutzen. Werden diese Daten auch für die Sortenverwaltung genutzt, können die jeweilig richtigen Datensätze an der Maschine direkt verwendet oder von der zentralen Sortenverwaltung in die Maschine geleitet werden. Ein aufwändiges und mit erheblichen Verlusten behaftetes nachträgliches Ändern der Parameter kann dabei entfallen. Unter einer automatisierten Weitergabe bzw. Berücksichtigung wird insbesondere verstanden, dass die Steuerung einer Behandlungseinheit die entsprechenden Daten bzw. für diese Daten charakteristische Daten oder Signale an eine weitere Steuerungseinrichtung überträgt. Werden beispielsweise während der Produktion andere Materialien eingesetzt, z. B. weil kein weiteres gleiches Material verfügbar ist, kann die erforderliche Anpassung von Parametern an die Maschine gemeldet werden. Dies ist beispielsweise durch eine Anzeige am Bildschirm der Maschine möglich.

Unter Behandlungsparametern werden sämtliche Parameter verstanden welche die Behandlung der Behältnisse beeinflussen, wie beispielsweise Blasdrücke bei Blasmaschinen, Heiztemperaturen für Vorformlinge, Transportgeschwindigkeiten und dergleichen.

Möglich wäre es jedoch auch, zumindest teilweise eine direkte Einstellung oder Änderung an Einstellungen an der Maschine vorzunehmen.

Weiterhin ist es auch möglich, die Auswirkungen von unterschiedlichen Materialien auf das Laufverhalten der Maschine bzw. der Anlage durch Zuordnung von Störungen, erreichten Laufzeiten, Ausschuss usw. zu dokumentieren und auszuwerten. Dies ermöglicht dem Anwender die Beurteilung und die ökonomische Auswahl von Materialien unterschiedlicher Hersteller und unterschiedlicher Qualität.

Es wird daher vorgeschlagen, insbesondere übergeordnet zu Verfügung stehende Daten auch für die Steuerung weiterer Maschinen der Anlage zu verwenden.

Erfindungsgemäß werden für die Steuerung der ersten Behandlungseinheit relevante Produktparameter derart an eine Steuerung der zweiten Behandlungseinheit übertragen, dass sie auch zur Steuerung der zweiten Behandlungseinheit verwendbar sind. Dabei wäre es grundsätzlich möglich, dass jede Behandlungseinheit eine eigene Steuereinrichtung zugeordnet ist. Es wäre jedoch auch möglich, dass eine zentrale Steuereinheit mehrere Behandlungseinheiten ansteuert. Eine Übertragung der Produktparameter ist dabei sowohl drahtlos als auch über Verbindungsleitungen denkbar.

Vorteilhaft wird durch Erfassen einer dem Behältnis zugeordneten Erkennungsmarke wenigstens ein für das Behältnis charakteristischer Produktparameter ermittelt und auf Basis dieses charakteristischen Produktparameters wenigstens ein Behandlungsparameter verändert.

Es wird daher vorgeschlagen, dass die Sortenauswahl nicht menügeführt, beispielsweise an einem Display erfolgt, sondern mit speziell codierten Behältnissen bzw. Musterflaschen. So ist es möglich, dass für jede auswählbare Sorte ein Musterbehältnis vorhanden ist, dem eine Erkennungsmarke zugeordnet ist. Dabei ist es möglich, dass diese Erkennungsmarke an dem Behältnis selbst aufgebracht ist, dass beispielsweise das Behältnis mit einem Data-Matrix-Code versehen ist, anhand dessen die Sorten eindeutig unterschieden werden können. Es wäre jedoch auch möglich, dass eine Vielzahl von Musterbehältnissen in den Aufbewahrungseinrichtungen in dem Schrank angeordnet sind und die Erkennungseinrichtungen jeweils in anderer Weise, jedoch eindeutig den bestimmten Behältnissen zugeordnet sind, beispielsweise in Form von Etiketten, welche an den entsprechenden Aufbewahrungsmitteln für die Behältnisse angeordnet sind. Die Erkennungsmarke bzw. der Code kann auch bereits durch den Etikettenhersteller, z. B. auf dem Rückenetikett serienmäßig aufgebracht sein oder über eine zusätzliche Erkennungsmarke wie einem zusätzlichen Aufkleber an der Musterflache. Auch wäre es möglich, dass die Erkennungsmarken direkt auf das Behältnis aufgedruckt sind. Zusätzlich und/ oder alternativ kann jedoch auch eine Auswahl über eine Liste an einem Display zur Verfügung gestellt werden.

Anstelle des oben erwähnten Data - Matrix - Codes oder evtl. zusätzlich zu diesem könnte auch ein RFID - Transponder, der beispielsweise an dem Behältnis angeordnet ist, Anwendung finden. Mittels dieses Transponders könnten die oben erwähnten charakteristischen Parameter ausgelesen bzw. ermittelt werden.

Um den Sortenwechsel durchzuführen, muss der Maschinenbediener die codierte Musterflasche auswählen, das Handlesegerät, wie zum Beispiel ein Cognex-Data Man 750, auf deren Erkennungsmarke bzw. Code ausrichten, und den Code mittels Triggern des Handlesers (beispielsweise durch Drücken einer Auslesetaste) eingeben. Das Handlesegerät ist über eine entsprechende Schnittstelle mit der Maschine bzw. Anlage (bzw. deren Steuerung) verbunden und überträgt den erfassten Code dorthin. Damit ist es möglich, dass durch das Erfassen des neuen Codes direkt ein Sortenwechsel zu der entsprechenden Sorte eingeleitet wird.

Auf diese Weise kann der Bediener die Auswahl der Sorte über eine fertig ausgestattete Flasche treffen. Dies ist erheblich einfacher als die Auswahl eines Textes aus einer sehr langen Liste. Es wäre jedoch auch möglich, dass die Daten aus anderen Quellen entnommen werden, wie beispielsweise aus Lieferscheinen des Materials. Auf diesen Lieferscheinen befindet sich üblicherweise eine Erkennungsmarke wie ein Balkencode, der von einem Erfassungsgerät ausgelesen werden kann. Dabei ist es möglich, dass diese Daten z. B. für ein Lagerverwaltungssystem eingelesen und für die Lagerverwaltung genutzt werden.

Daneben wäre es möglich, dass die Erkennungsmarke auf einer Umverpackung der Behältnisse angeordnet ist, etwa auf einem Karton oder einer Gitterbox, in der die Kunststoffvorformlinge angeordnet sind.

So kann eine Zeitersparnis bei der Auswahl der neuen Produktionssorte erreicht werden. Daneben hat die Bedienung den Vorteil, dass bei einer Auswahl über das Behältnis die Auswahl visuell bzw. auch haptisch erfolgt und auf diese Weise ist eine wesentlich einfachere und sicherere Kontrolle für das Bedienungspersonal möglich und es werden auch nur geringere Anforderungen an das Abstraktionsvermögen des Personals gestellt.

Vorteilhaft weist die Behandlungseinheit der Anlage eine Vielzahl von Behandlungselementen auf, und die Behandlungsparameter mehrerer Behandlungselemente werden verändert. So kann eine derartige Anlage beispielsweise eine Fülleinrichtung zum Befüllen der Behältnisse, Etikettiereinrichtungen zum Etikettieren der Behältnisse, Blasstationen zum Umformen von Kunststoffvorformlingen zu Kunststoffbehältnissen, wie insbesondere Streckblasmaschinen, Packer, Palettierer und dergleichen aufweisen.

Vorteilhaft ist die erste Behandlungseinheit eine Umformungseinrichtung zum Umformen von Kunststoff in Behältnissen. Daneben kann es sich jedoch bei der ersten Behandlungseinheit auch um eine Etikettiermaschine zum Etikettieren der Behältnisse oder eine Fülleinrichtung zum Befüllen der Behältnisse handeln.

Bei einem weiteren vorteilhaften Verfahren werden in Abhängigkeit von den ermittelten Parametern über eine Anzeigeeinrichtung Informationen über das herzustellende Behältnis an einen Bediener ausgegeben. Dazu kann beispielsweise einem Bediener eine Auswahl an möglichen Behältnissen ausgegeben werden, wobei er dann anhand dieser (reduzierten) Auswahl das richtige Behältnis auswählen kann. Weiterhin kann der Benutzer bzw. Bediener über die Anzeigeeinrichtung gebeten werden, eine von der Maschine getroffene Auswahl zu bestätigen. Hierzu kann dem Bediener eine Liste mit möglichen Behältnissen vorgelegt werden.

Die vorliegende Erfindung ist weiterhin auf eine Anlage zum Behandeln von Behältnissen gerichtet. Diese Anlage weist eine erste Behandlungseinheit auf, welche die Behältnisse in einer ersten vorgegebenen Weise behandelt, sowie eine Steuerungseinrichtung, welche die Behandlung der Behältnisse durch die erste Behandlungseinheit auf Basis von vorgegebenen ersten Behandlungsparametern steuert, wobei die ersten Behandlungsparameter wenigstens teilweise veränderbar sind und wenigstens teilweise von für die zu behandelnden Behältnisse charakteristische Produktparametern abhängen. Weiterhin weist die Anlage eine zweite Behandlungseinheit auf, welche die Behältnisse in einer zweiten vorgegebenen Weise behandelt und eine Steuerungseinrichtung, welche die Behandlung der Behältnisse durch die zweite Behandlungseinheit auf Basis von vorgegebenen zweiten Behandlungsparametern steuert, wobei diese zweiten Behandlungsparameter wenigstens teilweise veränderbar sind und wenigstens teilweise von für die zu behandelnden Behältnisse charakteristischen Produktparametern (der zu behandelnden Behältnisse) abhängen.

Die für die Steuerung der ersten Behandlungseinheit hinterlegte Produktparameter des Behältnisses sind auch für die Steuerung der zweiten Behandlungseinheit verwendbar, wobei Änderungen der Produktparameter automatisiert sowohl für die Steuerung der ersten Behandlungseinheit, als auch für die Steuerung der zweiten Behandlungseinheit berücksichtigt werden.

Damit wird auch vorrichtungsseitig vorgeschlagen, Produktparameter, welche für eine Behandlungseinheit hinterlegt, bzw. insbesondere vorbekannt sind, auch für die Steuerung einer weiteren Behandlungseinheit zu verwenden.

Erfindungsgemäß weist die Anlage eine Datenübertragungseinrichtung auf, welche für die Steuerung der ersten Behandlungseinheit relevante Produktparameter derart an eine Steuerungseinrichtung der zweiten Behandlungseinheit überträgt, dass sie zur Steuerung der zweiten Behandlungseinheit verwendbar sind.

Vorteilhaft weist die Anlage eine zentrale Steuerungseinheit auf, welche wenigstens zeitweise in Datenkommunikation mit den Steuerungen der einzelnen Behandlungseinheiten steht.

Vorteilhaft weist die Anlage eine Erfassungseinrichtung zum Erfassen einer dem Behältnis zugeordneten Erkennungsmarke auf, wobei die Erfassungseinrichtung wenigstens zeitweise in Datenkommunikation mit der Steuerungseinrichtung steht, um durch Erfassung der Erkennungsmarke ermittelte Produktparameter des Behältnisses an die Steuereinrichtung zu übertragen. In der Reaktion auf die entsprechenden Produktparameter kann die Steuereinrichtung beispielsweise die Behandlungsparameter selbsttätig ändern, oder an den Benutzer Informationen über die durchzuführenden Änderungsschritte ausgeben.

Bei einer bevorzugten Ausführungsform weist die Erfassungseinrichtung eine optische Leseeinrichtung auf, welche die Erkennungsmarke erfasst. Hierbei kann es sich beispielsweise um einen Barcode-Scanner handeln.

Vorteilhaft ist wenigstens eine Behandlungseinheit aus einer Gruppe von Behandlungseinheiten ausgewählt, welche Blasmaschinen, insbesondere Streckblasmaschinen, Etikettiermaschinen, Füller, Sterilisationseinrichtungen, Verschließer und dergleichen enthält.

Weitere Vorteile und Ausführungsformen ergeben sich aus den beigefügten Zeichnungen.

Darin zeigen:
- Fig. 1: eine schematische Darstellung einer Behältnisbehandlungsanlage nach dem Stand der Technik;
- Fig. 2: ein Ablaufdiagramm nach dem Stand der Technik;
- Fig. 3: eine schematische Darstellung einer Behältnisbehandlungsanlage in einer weiteren Ausführungsform nach dem Stand der Technik;
- Fig. 4: eine Darstellung zur Veranschaulichung einer Datenübernahme; und
- Fig. 5: eine Darstellung zur Veranschaulichung einer Datenübernahme;

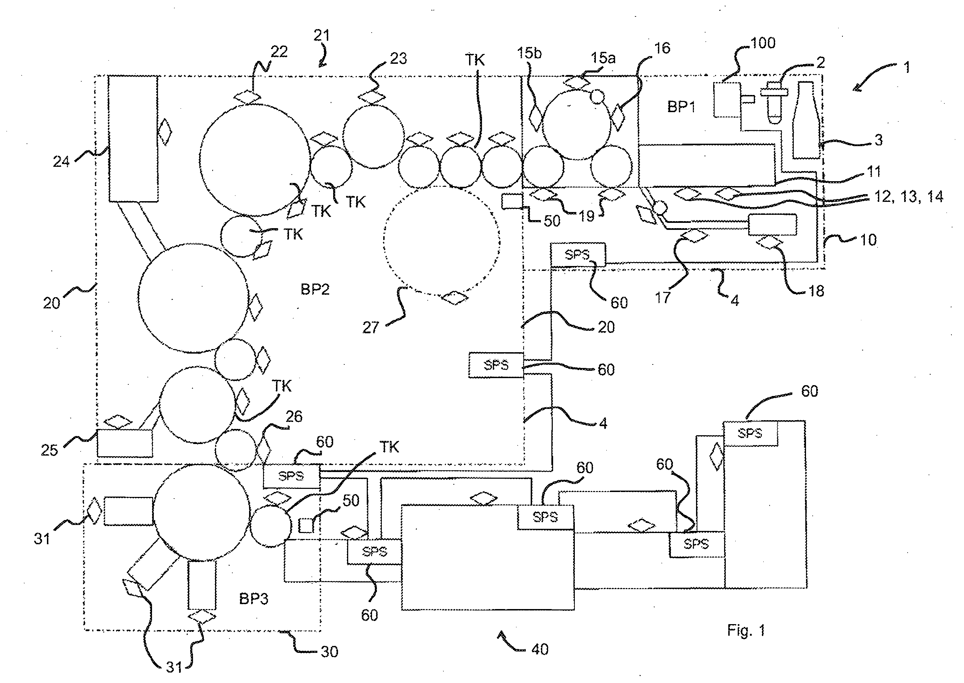

Fig. 1 zeigt eine schematische Darstellung einer Behältnisbehandlungsanlage 1 zur Behandlung von mit einem Produkt befüllbaren Behältnissen. Der Behältnisbehandlungsanlage werden Vorformlinge 2 aus Kunststoff oder Glasbehältnisse 3 zugeführt. Die Behältnisbehandlungsanlage umfasst ein Streck-Blasmodul 10, ein Füllmodul bzw. einen Füllmodulwechselautomat 20, ein Etikettiermodul 30 und ein Verpackungsmodul 40. Das Streck-Blasmodul 10 und das Füllmodul 20 sind jeweils mit einer Schutzeinrichtung 4 versehen, um das Streck-Blasmodul 10 und das Füllmodul 20 gegen äußere Einflüsse abzuschirmen bzw. Bedienpersonen vor Anlagenmodulteilen zu schützen, welche die Bedienperson evtl. im Betrieb der Anlage gefährden könnten.

In dem Streck-Blasmodul 10 werden Vorformlinge 2 aus Kunststoff, wie beispielsweise Polyethylenterephthalat (PET) oder Polypropylen (PP), in einer Erwärmungseinrichtung 11, die einen Heizdorn bzw. Heizdornwechselautomat 12, eine Abschirmplatte bzw. Abschirmplattenwechselautomat 13 und Reflektoren bzw. Reflektorenwechselautomat 14 umfasst, erwärmt und mittels eines Streckblasverfahrens in ein Behältnis, wie beispielsweise eine Flasche, für ein Produkt, wie beispielsweise eine Flüssigkeit, geformt. Hierzu umfasst das Streck-Blasmodul 10 zudem eine Reckstange/Blasdüse bzw. Reckstange/Blasdüsenwechselautomat 15a, eine Reckkurve/Bodenkurve Reckkurve/Bodenkurve-Verstell- oder Wechselautomat 15b , eine Blasformeinrichtung bzw. Blasformwechselautomat 16, eine Schieneneinstelleinrichtung 17, eine Rollenabstandeinstelleinrichtung 18 und Klammern bzw. Klammernwechselautomat 19 zum Greifen der Behältnisse.

Bei der Zufuhr von Glasflaschen 3 zu der Behältnisbehandlungsanlage 1 kann das Streck-Blasmodul 10 umgangen werden. Es ist darauf hinzuweisen, dass im Sinne dieser Beschreibung mit den mit einem Produkt befüllbaren Behältnissen insbesondere die Vorformlinge 2, die daraus fertiggestellten Behältnisse bzw. Kunststoffflaschen, und die Glasflaschen 3 gemeint sind.

Die einzelnen für das Streck-Blasmodul relevanten Behandlungsparameter sind dabei die ersten Behandlungsparameter und mit dem Bezugszeichen BP1 gekennzeichnet, wie etwa eine Bewegungsgeschwindigkeit einer Reckstange, die geometrische Gestalt einer Bodenform, ein auf die Kunststoffvorformlinge aufzubringender Blasdruck, eine Abfolge unterschiedlicher Blasdrücke zur Expansion der Kunststoffvorformlinge, eine Temperatur der Blasformen und dergleichen.

Die von dem Streck-Blasmodul 10 fertiggestellten Behältnisse für das Produkt werden über Transporteinrichtungen, wie beispielsweise Transportkarusselle TK, dem Füllmodul 20 zugeführt, welches die Behältnisse mit mindestens einem Produkt befüllt und dann verschließt. Hierzu umfasst das Füllmodul 20 eine Reinigungseinrichtung 21 mit einer Sterilisationsstation 22 und einem Rinser 23 zum Reinigen der Behältnisse, eine Produktmischeinrichtung 24 zum Mischen eines in die Behältnisse zu füllenden Produkts, eine Verschlusskappenstation 25 zum Zuführen und Anbringen von Verschlusskappen an den Behältnissen, und einen Ablenkstern oder Klammern 26 zum Weitertransport der Behältnisse. In einem dynamischen Puffer 27 können die von dem Streck-Blasmodul 10 ankommenden Behältnisse im Bedarfsfall zwischengelagert bzw. gepuffert werden.

Die von dem Füllmodul 20 verwendeten Parameter sind dabei die zweiten Behandlungsparameter BP2, wie etwa eine Füllgeschwindigkeit, eine Fülltemperatur der abzufüllenden Flüssigkeit und dergleichen.

Daraufhin werden die befüllten und verschlossenen Behältnisse dem Etikettiermodul 30 zugeführt, von ihm mittels mindestens einer Etikettiereinrichtung 31 etikettiert und anschließend über Transporteinrichtungen, wie beispielsweise Transportkarusselle TK dem Verpackungsmodul 40 zugeführt, in welchem die Behältnisse verpackt werden.

Die seitens des Etikettiermoduls verwendeten Behandlungsparameter sind dabei die dritten Behandlungsparameter BP3 beispielsweise ein verwendeter Leim für die Etiketten, eine Art der Etiketten und dergleichen.

Zudem umfasst die Behältnisbehandlungsanlage 1 Prüfeinrichtungen 50 zum Prüfen der mittels der Behältnisbehandlungsanlage 1 behandelten Behältnisse 2. In Fig. 1 ist hierbei eine Prüfeinrichtung 50 zwischen Streck-Blasmodul 10 und Füllmodul 20 sowie eine weitere Prüfeinrichtung 50 zwischen Etikettiermodul 30 und Verpackungsmodul 40 vorgesehen. Die Prüfeinrichtungen 50 können im Bedarfsfall jedoch auch an anderen oder weiteren Stellen in der Behältnisbehandlungsanlage 1 vorgesehen sein. Mit Hilfe eines Prüfergebnisses der Prüfeinrichtungen 50 können fehlerhafte Behältnisse vor einer weiteren Behandlung durch andere Anlagenmodule aussortiert werden.

Jedes der Anlagenmodule 10, 20, 30 und 40 umfasst zudem eine Anlagenmodulsteuereinrichtung 60, welche,beispielsweise eine speicherprogrammierbare Steuerung (SPS) sein kann, wie in Fig. 1 angegeben. In Fig. 1 sind die Anlagenmodulsteuereinrichtungen 60 in Reihe geschaltet. Die Kommunikation der Anlagenmodulsteuereinrichtungen 60 untereinander kann über ein drahtloses lokales Netzwerk (wireless LAN) oder über Bluetooth erfolgen

Zur Erfassung von Eigenschaften der Behältnisse bzw. der Produktparameter umfasst die Behältnisbehandlungsanlage 1 darüber hinaus eine Erfassungseinrichtung 90, welche beispielsweise eine Kamera sein kann. Die Erfassungseinrichtung 90 kann jedoch auch ein beliebiger Sensor sein, welcher zur Erfassung von Erkennungsmarken der Behältnisse geeignet ist. Ein solcher Sensor kann beispielsweise auf der Grundlage eines optischen, magnetischen oder mechanischen, usw. Prinzips arbeiten. Die Erfassungseinrichtung 90 ist mit der Anlagenmodulsteuereinrichtung 60 des Streck-Blasmoduls 10 verbunden. Daneben kann die Erfassungseinrichtung 90 auch mit einer zentralen Steuerungseinrichtung 95 kommunizieren, wobei die zentrale Steuerungseinrichtung relevante Daten wiederum weiter an die einzelnen Anlagenmodulsteuereinrichtungen weitergeben.

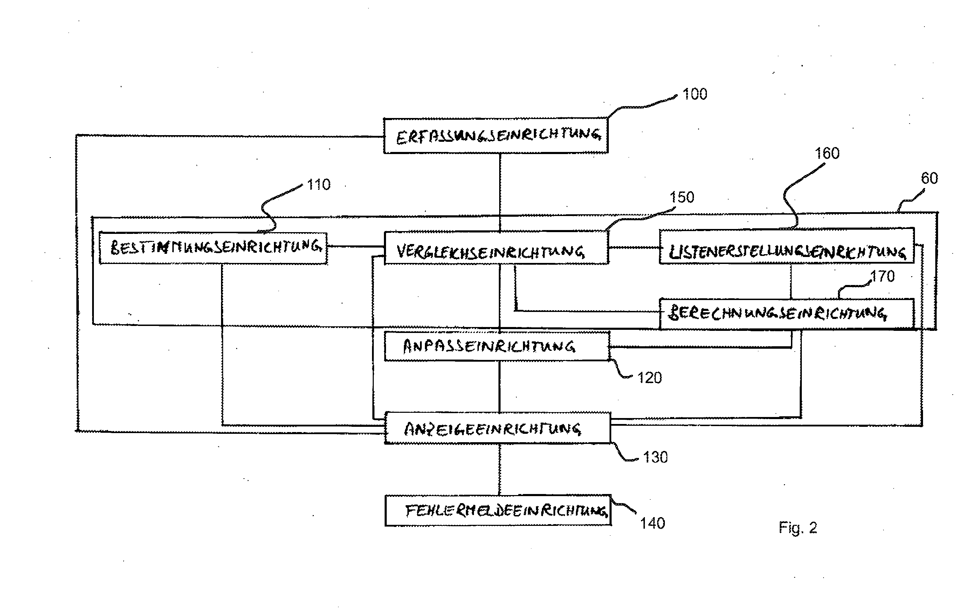

Fig. 2 veranschaulicht ein Verfahren nach dem internen Stand der Technik der Anmelderin, wobei die einzelnen Aspekte jedoch mit den Merkmalen der vorliegenden Erfindung kombinierbar sind.

Wie in Fig. 2 gezeigt, hat jede Anlagenmodulsteuereinrichtung 60 eine Bestimmungseinrichtung 110, eine Vergleichseinrichtung 150, eine Listenerstellungseinrichtung 160 und eine Berechnungseinrichtung 170. Hierbei dient die Bestimmungseinrichtung 110 zur Bestimmung der in der Behältnisbehandlungsanlage 1 montierten Behandlungselemente bzw. mittels von Behandlungselementen zu erzielenden Behandlungsergebnissen bzw. Rezepten zur Behandlung der Behältnisse, die später näher beschrieben sind. Hierzu können die Behandlungselemente mit RFID-Chips (RFID: Radio Frequency Identification = Funkidentifikation) und/oder einem Code, wie beispielsweise einem Barcode (Strichcode) oder einem anderen zweidimensionalen Code, versehen sein, welche per Funk oder nach einem optischen, magnetischen oder mechanischen Prinzip usw. auslesbar sind. Die Funktion der Vergleichseinrichtung 150, der Listenerstellungseinrichtung 160 und der Berechnungseinrichtung 170 wird später ausführlicher beschrieben.

Zudem hat die Behältnisbehandlungsanlage 1 eine in Fig. 2 gezeigte Anpasseinrichtung 120 zum Anpassen der in der Behältnisbehandlungsanlage 1 montierten Behandlungselemente bzw. mittels von Behandlungselementen zu erzielenden Behandlungsergebnissen bzw. Rezepten zur Behandlung der Behältnisse, die später näher beschrieben sind. Das heißt der Begriff "Behandlungselement" umfasst im Sinne dieser Beschreibung sowohl ein Werkzeug, wie beispielsweise die Klammern 19, als auch mittels von Behandlungselementen zu erzielende Behandlungsergebnisse als auch Rezepte zur Behandlung der Behältnisse.

Die Behältnisbehandlungsanlage 1 hat zudem eine in Fig. 2 gezeigte Anzeigeeinrichtung 130 zur Anzeige von Informationen über beispielsweise Betriebszustände der Behältnisbehandlungsanlage 1 oder ihrer einzelnen Anlagenmodule 10, 20, 30, 40 oder ihrer Behandlungselemente usw. Die Anzeigeeinrichtung 130 kann jede beliebige herkömmliche Anzeigeeinrichtung sein.

Bei einem Fehler beim Betrieb der Behältnisbehandlungsanlage 1 kann eine Fehlermeldeeinrichtung 140 eine Fehlermeldung ausgeben, wie beispielsweise einen optischen oder akustischen Alarm. Der Alarm kann auch mittels der Anzeigeeinrichtung 130 angezeigt werden.

Wie zuvor beschrieben, führt also jedes der Anlagenmodule 10, 20, 30 und 40 eine spezielle bzw. vorbestimmte Behandlung der Behältnisse aus, wie Streckblasen, Füllen, Etikettieren, etc.

Hierzu umfasst jedes der Anlagenmodule 10, 20, 30 und 40 der Behältnisbehandlungsanlage 1 eine Vielzahl von verschiedenen Garnituren bzw. Behandlungselementen, welche bei den unterschiedlichen Behandlungen der Behältnisse verwendbar sind. Das heißt, das Streck-Blasmodul 10 umfasst beispielsweise die folgenden Behandlungselemente: Heizdorne 12, Abschirmplatte 13, Reflektoren 14, Reckstange/Blasdüse 15, Schieneneinstelleinrichtung 17, Rollenabstandeinstelleinrichtung 18, Klammern 19 etc.

Im Folgenden wird auch von Flaschen gesprochen, wenn die aus den Vorformlingen 2 fertiggestellten Behältnisse oder die Glasbehältnisse 3 gemeint sind.

Genauer gesagt, umfassen die einzelnen genannten Anlagenmodule 10, 20, 30 und 40 der Behältnisbehandlungsanlage sowie nicht dargestellte Anlagenmodule (Pasteurmodul zur Pasteurisierung von in Behältnisse füllbaren Produkten, Behältnisreinigungsmodul zur Reinigung von Behältnissen und bevorzugt Mehrwegflaschen, Kastenwaschmodul zum Waschen von Kasten) der Behältnisbehandlungsanlage beispielsweise die folgenden einzelnen Behandlungselemente bzw. mittels von Behandlungselementen zu erzielende Behandlungsergebnisse bzw. Rezepte, wobei die einzelnen Behandlungselemente zur Vereinfachung nicht alle in Fig. 1 dargestellt sind. Dabei sind auch jeweils veränderbare Parameter dargestellt.

Die genannten Anlagenmodule 10, 20, 30 und 40 und deren zuvor genannten vielzähligen Behandlungselemente sind jeweils aus dem Stand der Technik bekannt und werden demzufolge hier nicht näher beschrieben. Vorzugsweise erfolgt die jeweilige Anpassung der Behandlungselemente vollautomatisch.

Nachfolgend wird der mit der Anpasseinrichtung 120 in Zusammenhang stehende Betrieb der Behältnisbehandlungsanlage 1 ausführlicher beschrieben.

In einer Abfülllinie der Behältnisbehandlungsanlage 1 erfasst die Erfassungseinrichtung 90 Erkennungsmarken eines der zu behandelnden Behältnisse 2, 3, wie zuvor beschrieben. Die Erfassungsergebnisse der Erfassungseinrichtung 90 werden der Vergleichseinrichtung 150 zugeführt. Die Vergleichseinrichtung 150 führt dann einen Vergleich eines Erfassungsergebnisses oder der Erfassungsergebnisse der Erfassungseinrichtung 90 mit einem Behältnis-Sollwert für die Vielzahl von Behandlungselementen 11 bis 19, 21 bis 27, 31 aus.

Der Behältnis-Sollwert gibt an, welche Art von Behältnis 2, 3 das Behandlungselement 11 bis 19, 21 bis 27, 31 behandeln kann. Das heißt, der Behältnis-Sollwert sagt beispielsweise aus, ob es sich bei dem Behältnis 2, 3 um einen Vorformling 2 für beispielsweise eine 0,5 Liter fassende Kunststofflasche, einen Vorformling 2 für beispielsweise eine 1,0 Liter fassende sche usw. oder um einen Vorformling 2 aus PET oder PP, oder um eine Glasflasche 3 usw. handelt. Weitere Werte, die dem Behältnis-Sollwert eines Behältnisses 2,3 zugeordnet sein können, sind: Eine Höhe und/oder ein Durchmesser eines Mundstücks eines Vorformlings 2 oder Behältnisses 2, 3; ein Durchmesser eines Transportrings (Ausbuchtung im Schulterbereich von Kunststoffflaschen, insbesondere PET-Flaschen); eine Gesamthöhe oder ein größter Durchmesser eines Behältnisses, wie beispielsweise einer Flasche; ein Durchmesser in einer bestimmten Höhe zum Eingriff von Behandlungseinheiten, speziell die Durchmesser direkt oberhalb und unterhalb des Transportrings, eine Bodenfreiheit eines ausgeformten Behältnisses, beispielsweise einer Flasche (Distanz zwischen Füßen der Flasche zu Anspritzpunkt); ein Material bzw. eine Materialzusammensetzung des Behältnisses 2, 3; eine Kristallinität des Materials des Behältnisses 2, 3; eine Art des Gewindes und/oder eines Verschlusses (z.B. Korken, Schnappverschluss, Kronkorken) des Behältnisses 2, 3; ein Durchmesser und eine Höhe des Verschlusses; eine Farbe des Behältnismaterials; eine Wandstärke des Behältnisses 2, 3 in bestimmten Bereichen; Festigkeiten, wie z.B. Top-load, des Behältnisses 2, 3.

Der Behältnis-Sollwert kann in einer nicht dargestellten Speichereinrichtung vorab gespeichert sein. Diese Speichereinrichtung kann insbesondere der zuvor erwähnte RFID-Chip oder Code sein, der an den Behandlungselementen angebracht ist. Bevorzugt handelt es sich um einen Barcode.

Wenn ein durch die Vergleichseinrichtung 150 durchgeführter Vergleich ergibt, dass das Erfassungsergebnis der Erfassungseinrichtung 100 ungleich dem Behältnis-Sollwert für das mindestens eine Behandlungselement 11 bis 19, 21 bis 27, 31 ist, kann die Anpasseinrichtung 120 mindestens ein Behandlungselement 11 bis 19, 21 bis 27, 31 der Vielzahl von Behandlungselementen 11 bis 19, 21 bis 27, 31 anpassen. Das heißt, die Anpasseinrichtung 120 kann das mindestens eine Behandlungselement 11 bis 19, 21 bis 27, 31 der Vielzahl von Behandlungselementen 11 bis 19, 21 bis 27, 31 entweder austauschen oder verstellen.

Darüber hinaus kann die Listenerstellungseinrichtung 160 eine Liste erstellen, in welcher die Behandlungselemente 11 bis 19, 21 bis 27, 31 aufgelistet sind, für welche der durch die Vergleichseinrichtung 150 durchgeführte Vergleich ergibt, dass das Erfassungsergebnis der Erfassungseinrichtung ungleich dem Behältnis-Sollwert für das mindestens eine Behandlungselement 11 bis 19, 21 bis 27, 31 ist. Die Liste kann auf der Anzeigeeinrichtung 130 angezeigt werden. Hierbei kann die Liste Hinweise geben, welche Behandlungselemente noch auszutauschen oder zu verstellen sind, und/oder angeben, welche Behandlungselemente gerade ausgetauscht oder verstellt werden. Somit kann eine Bedienperson wählen, ob die noch auszutauschenden oder zu verstellenden Behandlungselemente automatisch auszutauschen oder zu verstellen, das heißt anzupassen, sind, oder ob die Bedienperson gegebenenfalls bestimmte Behandlungselemente selbst anpassen möchte.

Vorzugsweise kann die Berechnungseinrichtung 170 eine Berechnung einer Reihenfolge durchführen, welche eine Reihenfolge einer Anpassung von mindestens einem Behandlungselement 11 bis 19, 21 bis 27, 31 der Vielzahl von Behandlungselementen 11 bis 19, 21 bis 27, 31. Diese Reihenfolge ist besonders vorteilhaft eine Reihenfolge, bei welcher ein Öffnen der Schutzeinrichtung 4 der Behältnisbehandlungsanlage 1 nicht durch die Anpassung von mindestens einem Behandlungselement 11 bis 19, 21 bis 27, 31 der Vielzahl von Behandlungselementen 11 bis 19, 21 bis 27, 31 behindert wird. Auch diese Reihenfolge kann auf der Anzeigeeinrichtung 130 angezeigt werden.

Wenn ein durch die Vergleichseinrichtung 150 durchgeführter Vergleich ergibt, dass das Erfassungsergebnis der Erfassungseinrichtung ungleich dem Behältnis-Sollwert für das mindestens eine Behandlungselement 11 bis 19, 21 bis 27, 31 ist, verhindern die Anlagenmodulsteuereinrichtungen 60 einen Betrieb der Behältnisbehandlungsanlage 1. Das heißt, falls die Behältnisbehandlungsanlage 1 noch in Betrieb ist, wenn der durch die Vergleichseinrichtung 150 durchgeführte Vergleich das genannte Ergebnis ergibt, wird die Behältnisbehandlungsanlage 1 mit einer nicht dargestellten Einrichtung zum Stopp der Behältnisbehandlungsanlage 1 gestoppt. Falls die Behältnisbehandlungsanlage 1 jedoch nicht in Betrieb ist bzw. stillsteht, wenn der durch die Vergleichseinrichtung 150 durchgeführter Vergleich das genannte Ergebnis ergibt, wird ein Anfahren der Behältnisbehandlungsanlage 1 unmöglich gemacht bzw. unterbunden. Hierzu kann die Behältnisbehandlungsanlage 1 eine nicht dargestellte Einrichtung zum Unterbinden eines Anfahrens der Behältnisbehandlungsanlage 1 umfassen. Der zwangsweise Stopp der Behältnisbehandlungsanlage 1 oder das zwangsweise Unterbinden eines Anfahrens der In den genannten Fällen, in denen eine Anpassung mindestens eines Behandlungselement 11 bis 19, 21 bis 27, 31 erforderlich ist, kann zudem mittels einer Fehlermeldeeinrichtung 140 eine Fehlermeldung ausgegeben werden, die auch auf der Anzeigeeinrichtung 130 angezeigt werden kann.

Da die einzelnen Anlagenmodulsteuereinrichtungen 60 gemäß diesem Ausführungsbeispiel in Reihe geschaltet sind, kann beispielsweise die Anlagenmodulsteuereinrichtung 60 des Füllmoduls 20 auf den Ergebnissen aufbauen, die bereits von der Anlagenmodulsteuereinrichtung 60 des Streck-Blasmoduls 10 erzielt wurden. Das heißt, die Vergleichseinrichtung 150, die Listenerstellungseinrichtung 160 und die Berechnungseinrichtung 170 des Anlagenmodulsteuereinrichtung 60 des Füllmoduls 20 können nicht nur die Behältnis-Sollwerte heranziehen, wie dies für die Vergleichseinrichtung 150, die Listenerstellungseinrichtung 160 und die Berechnungseinrichtung 170 der Anlagenmodulsteuereinrichtung 60 des Streck-Blasmoduls 10 der Fall ist, sondern auch die bereits von der Vergleichseinrichtung 150, der Listenerstellungseinrichtung 160 und der Berechnungseinrichtung 170 der Anlagenmodulsteuereinrichtung 60 des Streck-Blasmoduls 10.

### (Zweites Ausführungsbeispiel)

Das zweite Ausführungsbeispiel ist bis auf die Ausführung der Steuerung der Anlagenmodule 10, 20, 30 und 40 identisch zu dem ersten Ausführungsbeispiel. Daher werden im Folgenden nur die von dem ersten Ausführungsbeispiel verschiedenen Teile des zweiten Ausführungsbeispiels beschrieben. Gleiche und gleich bedeutende Teile sind mit gleichen Bezugszeichen versehen.

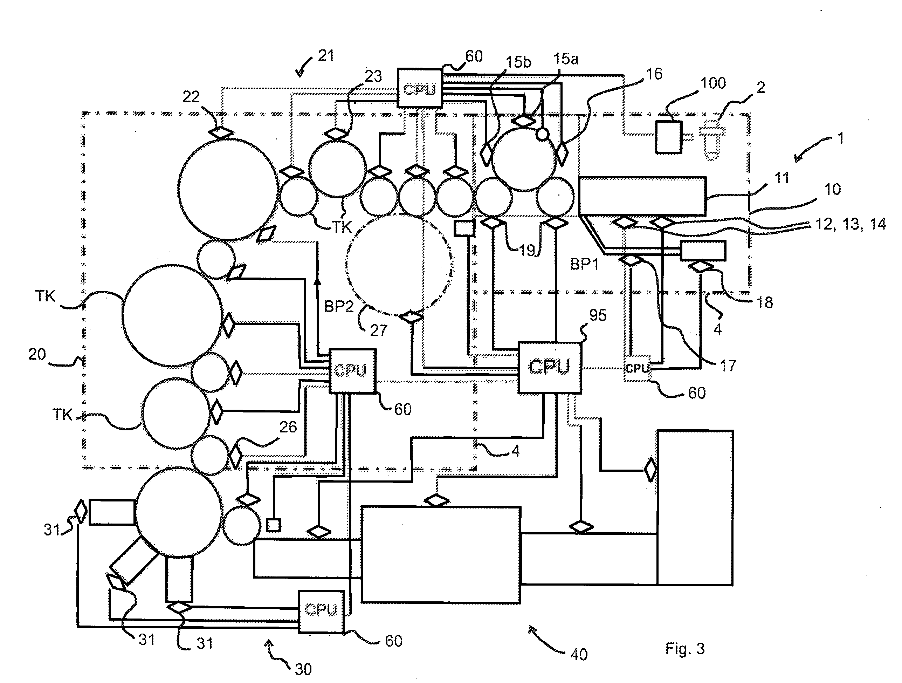

Wie aus Fig. 3 ersichtlich, sind die einzelnen Anlagensteuereinrichtungen 60 nicht in Reihe geschaltet, wie bei dem ersten Ausführungsbeispiel, sondern sie sind über ein Bussystem mit einer zentralen Anlagensteuereinrichtung 95 verbunden. Diese zentrale Anlagensteuereinrichtung 95 ist den einzelnen Anlagensteuereinrichtungen 60 übergeordnet und kann den einzelnen Anlagensteuereinrichtungen 60 Steuerbefehle geben, welche die einzelnen Anlagensteuereinrichtungen 60 für die Anlagenmodule 10, 20, 30 und 40 umsetzen können. Wie in Fig. 3 zudem angegeben, verfügen sowohl die einzelnen Anlagensteuereinrichtungen 60 als auch die zentrale Anlagensteuereinrichtung 95 über eine CPU (Central Processing Unit = zentrale Verarbeitungseinrichtung).

Gemäß dem zweiten Ausführungsbeispiel weist die zentrale Anlagensteuereinrichtung 95 die Vergleichseinrichtung 150, die Listenerstellungseinrichtung 160 und die Berechnungseinrichtung 170 auf. Die zentrale Anlagensteuereinrichtung 95 gibt dann an jede der Anlagenmodulsteuereinrichtungen 60 Befehle auf der Grundlage der durch die Vergleichseinrichtung 150, die Listenerstellungseinrichtung 160 und die Berechnungseinrichtung 170 erzielten Ergebnisse.

Wie in Fig. 3 gezeigt, sind die einzelnen Behandlungselemente anderen Anlagensteuereinrichtungen 60 zugeordnet als in Fig. 1 gezeigt. Je nach Bedarf kann diese Zuordnung auch anders gewählt werden.

Alle anderen Elemente und Funktionen sind bei diesem Ausführungsbeispiel gleich denen des ersten Ausführungsbeispiels und werden daher nicht noch einmal beschrieben.

### (Allgemeines)

Alle zuvor beschriebenen Ausgestaltungen der Behältnisbehandlungsanlage 1 und des Behältnisbehandlungsverfahrens können einzeln oder in allen möglichen Kombinationen Verwendung finden. Hierbei sind insbesondere folgende Modifikationen denkbar.

Die Steuerung der Behältnisbehandlungsanlage 1 kann auch über einen separaten Computer erfolgen. In diesem Fall kann eine Schnittstelle an der Erfassungseinrichtung 100 vorhanden sein, die insbesondere eine Kamera sein kann. Über die Schnittstelle kann die Erfassungseinrichtung 100 mit dem separaten Computer kommunizieren, beispielsweise drahtgebunden, per Funk, usw.

Die Auswertung der von der Erfassungseinrichtung 100 erfassten Ergebnisse, die Signale sein können, kann auch direkt in der Erfassungseinrichtung 100 vorgenommen werden, die beispielsweise ein Sensor ist.

Beispielsweise kann die Anpasseinrichtung 120 ein Roboter sein, welcher alle Behandlungselemente der Behältnisbehandlungsanlage 1 abfährt und erforderliche Anpassungen der Behandlungselemente vornimmt.

Es ist ferner möglich, den Austausch der Behandlungselemente mittels der Anpasseinrichtung 120 werkzeuglos durchzuführen. Dies ist beispielsweise insbesondere für den Schwenkarm und/oder die Heizdorne 12 und/oder die Abschirmplatte 13 möglich.

Zudem kann die Anpassung der Behandlungselemente des Füllmoduls 20, des Etikettiermoduls 30 und des Verpackungsmoduls 40 sowie der Prüfeinrichtungen 50 automatisch vollzogen werden, wenn an dem Streck-Blasmodul 10 eine entsprechende Rezeptwahl vorgenommen wurde, beispielsweise durch eine Bedienperson. Eine Eingabe der Bedienperson könnte praktisch mit der Rezeptwahl, bzw. durch Eingabe der Rezeptwahl, insbesondere über eine nicht dargestellte Schalteinrichtung, wie beispielsweise einen Taster, vorgenommen werden.

Es ist zudem möglich, dass die Anpasseinrichtung 120 nur eine Teilmenge der Behandlungselemente anpasst, welche insgesamt als anzupassen bestimmt wurden. Hierbei ist es möglich, dass mindestens zwei Behandlungselemente durch die Anpasseinrichtung 120 automatisch gewechselt werden, während die anderen Behandlungselemente, die als noch anzupassen bestimmt sind, durch eine Bedienperson angepasst werden. Statt der mindestens zwei Behandlungselemente können auch mindestens drei oder mehr Behandlungselemente durch die Anpasseinrichtung 120 automatisch gewechselt werden.

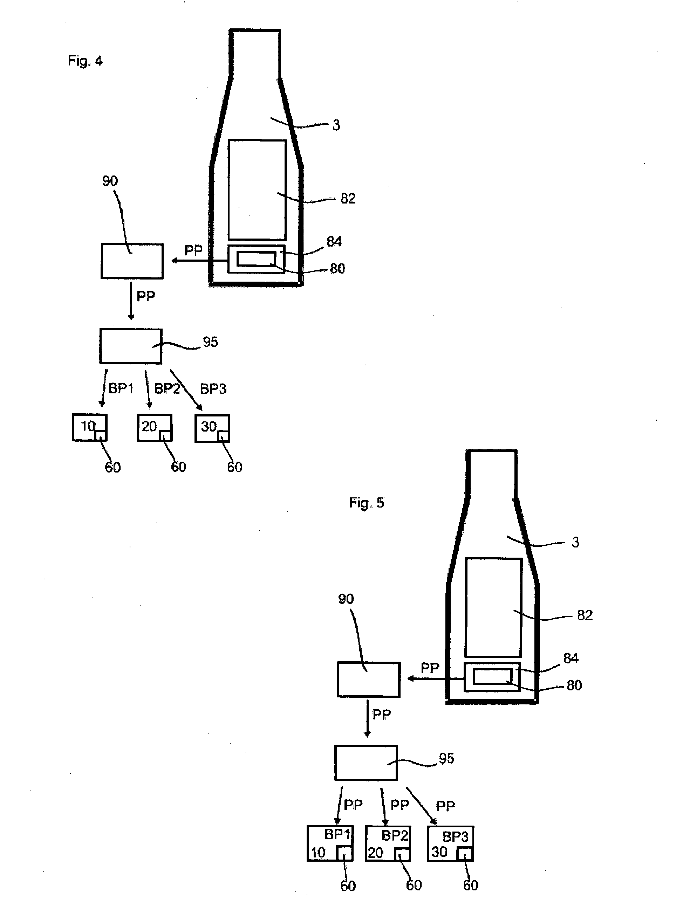

Fig. 4 zeigt eine Darstellung zur Veranschaulichung eines erfindungsgemäßen Verfahrens zur Datenübernahme. Dabei bezieht sich das Bezugszeichen 90 auf eine Erfassungseinrichtung, wie beispielsweise einen Barcodeleser, der dazu dient, um eine Erkennungsmarke 80, welche sich auf dem Behältnis 3 befindet, auszulesen. Dabei kann diese Erkennungsmarke 80 auf einem eigenen Etikett 84 auf dem Behältnis angeordnet sein, es wäre jedoch auch möglich, dass die Erkennungsmarke auf dem Standardetikett 82, welches sich auf dem Behältnis 3 befindet, angeordnet ist.

Bei dem Behältnis 3 kann es sich dabei sowohl um ein Standardbehältnis, als auch um eine spezielle Referenzflasche handeln. Mittels der Erfassungseinrichtung 90 können damit Produktparameter PP aus der Erkennungsmarke 80 ausgelesen werden. Grundsätzlich wäre es möglich, dass die jeweiligen Produktparameter direkt auf der Erkennungsmarke aufgedruckt sind, bevorzugt sind jedoch auf der Erkennungsmarke Symbole, beispielsweise ein Strichcode aufgebracht, welche charakteristisch für wenigstens einen Produktparameter und bevorzugt charakteristisch für eine Vielzahl von Produktparametern sind.

Bei diesen Produktparametern kann es sich dabei um Angaben über beispielsweise das Material des Kunststoffvorformlings, den Hersteller des Kunststoffvorformlings, eine Preformcharge, ein Verschlussmaterial, einen Hersteller der Behältnisverschlüsse, eine Verschlusscharge, ein Etikettenmaterial, einen Etikettenhersteller, eine Etikettencharge, oder beispielsweise auch ein Kartonagen- bzw. Folienmaterial handeln.

Daneben wären jedoch auch weitere Produktparameter denkbar, wie beispielsweise ein Volumen des fertiggestellten Behältnisses, Angaben über einzusetzende Blasformen und dergleichen. Diese Produktparameter werden den einzelnen Maschinen bzw. Anlagen der Behältnisbehandlungsanlage als relevante Daten über das tatsächlich eingesetzte Material zur Steuerung der Maschine oder auch einer einzelnen Maschinensteuerung 60 zugeführt. Dabei ist es möglich, dass die Erfassungseinrichtung 90 die Produktparameter PP an die oben erwähnte zentrale Steuerung 95 weiterleitet. Bereits die zentrale Steuerung 95 kann aus den Produktparametern PP die einzelnen Behandlungsparameter BP1, BP2 und BP3 ermitteln, und diese dann jeweils an die einzelnen Anlagen 10, 20, 30 bzw. deren Steuerungen weiterleiten.

Eine weitere Vorgehensweise ist in Fig. 5 veranschaulicht. Hierbei werden die Produktparameter PP an die einzelnen Steuerungen 60 weitergeleitet werden und diese ermitteln dann hieraus die einzelnen Behandlungsparameter BP1. BP2 und BP3. Auf Basis der einzelnen Behandlungsparameter können die einzelnen Umstellungen bzw. Einstellungen der Maschinenelemente vorgenommen werden, oder aber der Benutzer kann entsprechend angeleitet werden, wie die Umstellungen vorzunehmen sind. Beispiele für die Umstellungen wurden bereits oben angegeben. Es wäre weiterhin auch möglich, dass die Produktparameter nur einer der Steuerungen 60 übermittelt werden bzw. dieser einen Steuerung bereits werden, wie die Umstellungen vorzunehmen sind. Beispiele für die Umstellungen wurden bereits oben angegeben. Es wäre weiterhin auch möglich, dass die Produktparameter nur einer der Steuerungen 60 übermittelt werden bzw. dieser einen Steuerung bereits vorliegen und dann von dieser Steuerung 60 an die Steuerungen 60 der anderen Behandlungseinheiten übermittelt werden und diese weiteren Behandlungseinheiten dann aus den jeweiligen Produktparametern die jeweiligen Behandlungsparameter (z.B. BP2 und BP3) ermitteln.

Es ist damit bei dem in Fig. 4 und Fig. 5 dargestellten Verfahren nicht erforderlich, die Behältnisse zu vermessen, sondern es werden einfacher die für das Behältnis charakteristischen Parameter aus der Erkennungsmarke ausgelesen und anschließend zur Maschinenumstellung verwendet.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Behältnisbehandlungsanlage
- 2: Vorformlinge
- 3: Glasbehältnis
- 4: Schutzeinrichtung
- 10: Streck-Blasmodul
- 11: Erwärmungseinrichtung
- 12: Heizdorn bzw. Heizdornwechselautomat
- 13: Abschirmplatte bzw. Abschirmplattenwechselautomat
- 14: Reflektoren bzw. Reflektorenwechselautomat
- 15a: Reckstange/Blasdüse bzw. Reckstange/Blasdüsewechselautomat
- 15b: Reckkurve/Bodenkurve bzw. Reckkurve/Bodenkurve-Verstell- oder Wechselautomat
- 16: Blasformeinrichtung bzw. Blasformwechselautomat
- 17: Schieneneinstelleinrichtung
- 18: Rollenabstandeinstelleinrichtung
- 19: Klammern bzw. Klammernwechselautomat
- 20: Füllmodul bzw. Füllmodulwechselautomat
- 21: Reinigungseinrichtung
- 22: Sterilisationsstation
- 23: Rinser
- 24: Produktmischeinrichtung
- 25: Verschlusskappenstation
- 26: Ablenkstern oder Klammern
- 27: Dynamischer Puffer (Acculink)
- 30: Etikettiermodul
- 31: Etikettiereinrichtung
- 40: Verpackungsmodul
- 50: Prüfeinrichtung
- 60: Anlagenmodulsteuereinrichtung
- 90: Erfassungseinrichtung
- 95: Zentrale Anlagenmodulsteuereinrichtung
- 110: Bestimmungseinrichtung
- 120: Anpasseinrichtung
- 130: Anzeigeeinrichtung
- 140: Fehlermeldeeinrichtung
- 150: Vergleichseinrichtung
- 160: Listenerstellungseinrichtung
- 170: Berechnungseinrichtung
- TK: Transportkarussell
- BP1: erste Behandlungsparameter
- BP2: zweite Behandlungsparameter
- BP3: dritte Behandlungsparameter
- PP: Produktparameter

## Patentansprüche

1. Verfahren zum Betreiben einer Anlage (1) zum Behandeln von Behältnissen (2, 3), wobei die Behältnisse (2, 3) durch eine erste Steuerungseinrichtung (60, 95) von einer ersten Behandlungseinheit (10, 20, 30, 40) der Anlage mit vorgegebenen ersten Behandlungsparametern (BP1) behandelt werden und die Behältnisse (2, 3) von einer zweiten Behandlungseinheit (10, 20, 30, 40) der Anlage mit vorgegebenen zweiten Behandlungsparametern (BP2) behandelt werden und wobei die ersten Behandlungsparameter (BP1) und die zweiten Behandlungsparameter (BP2) wenigstens teilweise veränderbar sind und wenigstens teilweise von für das Behältnis (2, 3) charakteristischen Produktparametern (PP) abhängen, wobei
für die Steuerung der ersten Behandlungseinheit (10, 20, 30, 40) hinterlegte Produktparameter (PP) des Behältnisses (2, 3) auch für die Steuerung der zweiten Behandlungseinheit (10, 20, 30, 40) verwendet werden, wobei Änderungen der Produktparameter (PP) automatisiert sowohl für die Steuerung der ersten Behandlungseinheit (10, 20, 30, 40) als auch für die Steuerung der zweiten Behandlungseinheit (10, 20, 30, 40) berücksichtigt werden, **dadurch gekennzeichnet, dass** für die Steuerung der ersten Behandlungseinheit (10, 20, 30, 40) relevante Produktparameter derart an eine zweite Steuerungseinrichtung (60) der zweiten Behandlungseinheit (10, 20, 30, 40) übertragen werden, dass sie zur Steuerung der zweiten Behandlungseinheit (20) verwendbar sind.

2. Verfahren nach wenigstens einem der vorangegangenen Ansprüche,
**dadurch gekennzeichnet, dass**
wenigstens eine Behandlungseinheit eine Umformungseinrichtung (10) zum Umformen von Kunststoffvorformlingen (2) zu Kunststoffbehältnissen (3) ist.

3. Verfahren nach wenigstens einem der vorangegangenen Ansprüche,
**dadurch gekennzeichnet, dass**
durch Erfassen einer dem Behältnis (2, 3) zugeordneten Erkennungsmarke (80) wenigstens ein für das Behältnis (2, 3) charakteristischer Produktparameter (PP) ermittelt wird und auf Basis dieses charakteristischen Produktparameters (PP) wenigstens ein Behandlungsparameter (BP) verändert wird.

4. Verfahren nach wenigstens einem der vorangegangenen Ansprüche,
**dadurch gekennzeichnet, dass**
die Behandlungseinheit (10, 20, 30, 40) der Anlage eine Vielzahl von Behandlungselementen aufweist und Behandlungsparameter mehrerer Behandlungselemente verändert werden.

5. Verfahren nach wenigstens einem der vorangegangenen Ansprüche,
**dadurch gekennzeichnet, dass**
in Abhängigkeit von dem ermittelten Parameter über eine Anzeigeneinrichtung (130) Informationen über das herzustellende Behältnis (2, 3) ausgegeben werden

6. Anlage (1) zum Behandeln von Behältnissen (2, 3) mit einer ersten Behandlungseinheit (10, 20, 30, 40), welche die Behältnisse (2, 3) in einer ersten vorgegebenen Weise behandelt und mit einer ersten Steuerungseinrichtung (60, 95), welche die Behandlung der Behältnisse (2, 3) durch die erste Behandlungseinheit (10, 20, 30, 40) auf Basis von vorgegebenen ersten Behandlungsparametern (BP1) steuert, wobei diese ersten Behandlungsparameter (BP1) wenigstens teilweise veränderbar sind und wenigstens teilweise von für die zu behandelnden Behältnisse charakteristischen Produktparametern (PP) abhängen, und mit einer zweiten Behandlungseinheit (10, 20, 30, 40), welche die Behältnisse (2, 3) in einer zweiten vorgegebenen Weise behandelt und mit einer zweiten Steuerungseinrichtung (60), welche die Behandlung der Behältnisse (2, 3) durch die zweite Behandlungseinheit (10, 20, 30, 40) auf Basis von vorgegebenen zweiten Behandlungsparametern (BP) steuert, wobei diese zweiten Behandlungsparameter (BP2) wenigstens teilweise veränderbar sind und wenigstens teilweise von für die zu behandelnden Behältnisse (2, 3) charakteristischen Produktparametern (PP) abhängen, wobei
für die Steuerung der ersten Behandlungseinheit (10, 20, 30, 40) hinterlegte Produktparameter (PP) des Behältnisses (2, 3) auch für die Steuerung der zweiten Behandlungseinheit (10, 20, 30, 40) verwendbar sind, wobei Änderungen der Produktparameter (PP) automatisiert sowohl für die Steuerung der ersten Behandlungseinheit (10, 20, 30, 40) als auch für die Steuerung der zweiten Behandlungseinheit (10, 20, 30, 40) berücksichtigt werden, **dadurch gekennzeichnet, dass** die Anlage (1) eine Datenübertragungseinrichtung aufweist, welche für die Steuerung der ersten Behandlungseinheit (10, 20, 30, 40) relevante Produktparameter derart an die Steuerungseinrichtung (60) der zweiten Behandlungseinheit (10, 20, 30, 40) überträgt, dass sie zur Steuerung der zweiten Behandlungseinheit (20) verwendbar sind.

7. Anlage nach Anspruch 6,
**dadurch gekennzeichnet, dass**
die Anlage (1) eine Erfassungseinrichtung (90) zum Erfassen einer dem Behältnis (2, 3) zugeordneten Erkennungsmarke (80) aufweist, wobei die Erfassungseinrichtung (20) wenigstens zeitweise in Datenkommunikation mit einer der Steuerungseinrichtungen (60, 95) steht, um durch Erfassen der Erkennungsmarke ermittelte Produktparameter (PP) des Behältnisses (2, 3) an diese Steuerungseinrichtung (60, 95) zu übertragen.

8. Anlage (1) nach wenigstens einem der vorangegangenen Ansprüche 6 - 7,
**dadurch gekennzeichnet, dass**
die Anlage eine zentrale Steuerungseinheit (95) aufweist, welche wenigstens zeitweise in Datenkommunikation mit den Steuerungen (60) der einzelnen Behandlungseinheiten (10, 20, 30, 40) steht.

## Claims

1. A method of operating a plant (1) for the treatment of containers (2, 3), wherein the containers (2, 3) are treated by means of a first control unit (60, 95) by a first treatment unit (10, 20, 30, 40) of the plant with pre-set first treatment parameters (BP1) and the containers (2, 3) are treated by a second treatment unit (10, 20, 30, 40) of the plant with pre-set second treatment parameters (BP2) and wherein the first treatment parameters (BP1) and the second treatment parameters (BP2) are variable at least in part and depend at least in part upon product parameters (PP) characteristic of the container (2, 3), wherein product parameters (PP) of the container (2, 3) deposited for the control of the first treatment unit (10, 20, 30, 40) are also used for the control of the second treatment unit (10, 20, 30, 40), wherein changes in the product parameters (PP) are taken into consideration in an automated manner both for the control of the first treatment unit (10, 20, 30, 40) and for the control of the second treatment unit (10, 20, 30, 40), **characterized in that** product parameters being relevant for the control of the first treatment unit (10, 20, 30, 40) are transmitted to the second control unit (60) of the second treatment unit (10, 20, 30, 40) in such a manner that they can be used for the control of the second treatment unit (20).

2. A method according to at least one of the preceding claims, **characterized in that** at least one treatment unit is a shaping device (10) for shaping plastics material pre-forms (2) into plastics material containers (3).

3. A method according to at least one of the preceding claims, **characterized in that** at least one product parameter (PP) characteristic of the container (2, 3) is determined by the detection of an identification marking (80) allocated to the container (2, 3) and at least one treatment parameter (BP) is changed on the basis of this characteristic product parameter (PP).

4. A method according to at least one of the preceding claims, **characterized in that** the treatment unit (10, 20, 30, 40) of the plant has a plurality of treatment elements and the treatment parameters of a plurality of treatment elements are changed.

5. A method according to at least one of the preceding claims, **characterized in that** information on the container (2, 3) to be produced is displayed by way of a display device (130) in a manner dependent upon the parameter detected.

6. A plant (1) for the treatment of containers (2, 3) with a first treatment unit (10, 20, 30, 40) which treats the containers (2, 3) in a first pre-set manner and with a first control device (60, 95) which controls the treatment of the containers (2) by the first treatment unit (10, 20, 30, 40) on the basis of pre-set first treatment parameters (BP1), wherein these first treatment parameters (BP1) are capable of being changed at least in part and depend at least in part upon product parameters (PP) characteristic of the containers to be treated, and with a second treatment unit (10, 20, 30, 40) which treats the containers (2, 3) in a second pre-set manner and with a second control device (60) which controls the treatment of the containers (2, 3) by the second treatment unit (10, 20, 30, 40) on the basis of pre-set second treatment parameters (BP), wherein these second treatment parameters (BP2) are capable of being changed at least in part and depend at least in part upon product parameters (PP) characteristic of the containers (2, 3) to be treated, wherein product parameters (PP) of the container (2, 3) deposited for the control of the first treatment unit (10, 20, 30, 40) are also capable of being used for the control of the second treatment unit (10, 20, 30, 40), wherein changes in the product parameters (PP) are taken into consideration in an automated manner both for the control of the first treatment unit (10, 20, 30, 40) and for the control of the second treatment unit (10, 20, 30, 40), **characterized in that** the plant (1) comprises a data transmission unit, which transmits product parameters being relevant for the control of the first treatment unit (10, 20, 30, 40) to the control unit (60) of the second treatment unit (10, 20, 30, 40) in such a manner that they can be used for the control of the second treatment unit (20).

7. A plant according to claim 6, **characterized in that** the plant (1) has a detection device (90) for detecting an identification marking (80) which is allocated to the container (2, 3), wherein the detection device (20) communicates in terms of data with one of the control devices (60, 95) at least for a time in order to transmit product parameters (PP) of the container (2, 3) determined by detection of the identification marking to this control device (60, 95).

8. A plant (1) according to at least one of the preceding claims 6 - 7, **characterized in that** the plant has a central control unit (95) which communicates in terms of data with the control means (60) of the individual treatment units (10, 20, 30, 40) at least for a time.

## Revendications

1. Procédé d'exploitation d'une installation (1) de traitement de récipients (2, 3), les récipients (2, 3) étant traités au moyen d'un premier dispositif de commande (60, 95) par une première unité de traitement (10, 20, 30, 40) de l'installation avec des premiers paramètres de traitement (BP1) prédéfinis, et les récipients (2, 3) étant traités par une seconde unité de traitement (10, 20, 30, 40) de l'installation avec des seconds paramètres de traitement (BP2) prédéfinis, et les premiers paramètres de traitement (BP1) ainsi que les seconds paramètres de traitement (BP2) pouvant au moins en partie être modifiés et dépendant au moins en partie de paramètres de produit (PP) caractéristiques pour le récipient (2, 3),
les paramètres de produit (PP) du récipient (2, 3), créés pour la commande de la première unité de traitement (10, 20, 30, 40), étant également utilisés pour la commande de la seconde unité de traitement (10, 20, 30, 40), des modifications des paramètres de produit (PP) étant automatiquement prises en compte à la fois pour la commande de la première unité de traitement (10, 20, 30, 40) et pour la commande de la seconde unité de traitement (10, 20, 30, 40), **caractérisé en ce que** les paramètres de produit importants pour la commande de la première unité de v (10, 20, 30, 40) sont transmis à un second dispositif de commande (60) de la seconde unité de traitement (10, 20, 30, 40), de telle manière qu'ils peuvent être utilisés pour commander la seconde unité de traitement (20).

2. Procédé selon au moins l'une des revendications précédentes, **caractérisé en ce qu'**au moins une unité de traitement est un dispositif de transformation (10) destiné à transformer des préformes en matière plastique (2) pour obtenir des récipients en matière plastique (3).

3. Procédé selon au moins l'une des revendications précédentes, **caractérisé en ce qu'**au moins un paramètre de produit (PP) caractéristique pour le récipient (2, 3) est déterminé par détection d'une marque de reconnaissance (80) associée au récipient (2, 3) et au moins un paramètre de traitement (BP) est modifié sur la base de ce paramètre de produit caractéristique (PP).

4. Procédé selon au moins l'une des revendications précédentes, **caractérisé en ce que** l'unité de traitement (10, 20, 30, 40) de l'installation comprend une pluralité d'éléments de traitement et des paramètres de traitement de plusieurs éléments de traitement sont modifiés.

5. Procédé selon au moins l'une des revendications précédentes, **caractérisé en ce que** des informations concernant le récipient (2, 3) à fabriquer sont délivrées en fonction du paramètre déterminé au moyen d'un dispositif d'affichage (130).

6. Installation (1) de traitement de récipients (2, 3) pourvue d'une première unité de traitement (10, 20, 30, 40), laquelle traite les récipients (2, 3) d'une première façon prédéfinie, et d'un premier dispositif de commande (60, 95), lequel commande le traitement des récipients (2, 3) au moyen de la première unité de traitement (10, 20, 30, 40) sur la base de premiers paramètres de traitement (BP1) prédéfinis, ces premiers paramètres de traitement (BP1) pouvant au moins en partie être modifiés et dépendant au moins en partie de paramètres de produit (PP) caractéristiques pour les récipients à traiter, et d'une seconde unité de traitement (10, 20, 30, 40), laquelle traite les récipients (2, 3) d'une seconde façon prédéfinie, et d'un second dispositif de commande (60), lequel commande le traitement des récipients (2, 3) au moyen de la seconde unité de traitement (10, 20, 30, 40) sur la base de seconds paramètres de traitement (BP2) prédéfinis, ces seconds paramètres de traitement (BP2) pouvant au moins en partie être modifiés et dépendant au moins en partie de paramètres de produit (PP) caractéristiques pour les récipients (2, 3) à traiter,
les paramètres de produit (PP) du récipient (2, 3), créés pour la commande de la première unité de traitement (10, 20, 30, 40), étant également utilisés pour la commande de la seconde unité de traitement (10, 20, 30, 40), des modifications des paramètres de produit (PP) étant automatiquement prises en compte à la fois pour la commande de la première unité de traitement (10, 20, 30, 40) et pour la commande de la seconde unité de traitement (10, 20, 30, 40), **caractérisé en ce que** l'installation (1) comprend un système de transmission de données, lequel transmet les paramètres des produits importants pour la commande de la première unité de traitement (10, 20, 30, 40) au second dispositif de commande (60) de la seconde unité de traitement (10, 20, 30, 40), de telle manière qu'ils peuvent être utilisés pour commander la seconde unité de traitement (20).

7. Installation selon la revendication 6, **caractérisée en ce que** l'installation (1) comprend un système de détection (90) destiné à détecter une marque de reconnaissance (80) associée au récipient (2, 3), le système de détection (20) étant au moins temporairement en communication de données avec un des dispositifs de commande (60, 95), de manière à transmettre les paramètres de produit (PP) des récipients (2, 3) déterminés par détection de la marque de reconnaissance à ce dispositif de commande (60, 95).

8. Installation (1) selon au moins l'une des revendications 6 et 7, **caractérisée en ce que** l'installation comprend une unité de commande centrale (95), laquelle est au moins temporairement en communication de données avec les commandes (60) des unités de manipulation (10, 20, 30, 40) individuelles.
